Europäisches Patentamt

European Patent Office

Office européen des brevets

(19)

(11) Numéro de publication: **0017285 B1**

(12) **FASCICULE DE BREVET EUROPEEN**

(45) Date de publication du fascicule du brevet:
19.01.83

(21) Numéro de dépôt: 80200264.2

(22) Date de dépôt: 24.03.80

(51) Int. Cl.³: **C 22 B 7/00**, C 22 B 34/34,
C 22 B 34/22, C 22 B 23/00,
B 01 J 23/00

(54) Procédé de récupération de métaux à partir de catalyseurs d'hydrodésulfuration d'hydrocarbures.

(30) Priorité: 09.04.79 FR 7908940

(43) Date de publication de la demande:
15.10.80 Bulletin 80/21

(45) Mention de la délivrance du brevet:
19.01.83 Bulletin 83/3

(84) Etats contractants désignés:
AT BE CH DE GB IT LU NL SE

(56) Documents cités:
FR-A-724 905
FR-A-775 161
FR-A-2 063 366
FR-A-2 125 416
FR-A-2 180 078
US-A-3 180 706

(73) Titulaire: SOCIETE EUROPEENNE DES DERIVES DU
MANGANESE en abrégé SEDEMA SOCIETE ANONYME,
12 Avenue de la Renaissance, B-1050 Bruxelles (BE)

(72) Inventeur: Welsh, Jay Y., Maple Avenue 35, Catonsville,
Maryland 21228 (US)
Inventeur: Picquet, Pierre, Rue de la Licorne 12,
B-7020 Mons (BE)
Inventeur: Schyns, Pierre, 12 Rue Brisselot, B-7000 Mons
(BE)

(74) Mandataire: De Brabanter, Maurice et al, Bureau
VANDER HAEGHEN 63 Avenue de la Toison d'Or,
B-1060 Bruxelles (BE)

BUNDESDRUCKEREI BERLIN

Procédé de récupération de métaux à partir de catalyseurs d'hydrodésulfuration
d'hydrocarbures

La présente invention a pour objet la récupération du molybdène, du vanadium, de l'aluminium ainsi que du cobalt et du nickel à partir de résidus des catalyseurs d'hydrodésulfuration.

On utilise dans l'industrie du pétrole des catalyseurs à base de molybdène pour l'hydrodésulfuration d'hydrocarbures. Le traitement d'hydrodésulfuration consiste à mettre en contact du pétrole ou une fraction pétrolière avec de l'hydrogène et un catalyseur de manière à éliminer le soufre sous forme d'hydrogène sulfuré gazeux. Les catalyseurs utilisés à cet effet sont constitués généralement d'une matière support à base d'alumine renfermant, comme constituants actifs, soit du molybdène et du cobalt, soit du molybdène et du nickel. On utilise parfois aussi des catalyseurs dans lesquels le support est constitué par de la silice au lieu d'alumine.

Les constituants actifs, c'est-à-dire molybdène, cobalt et/ou nickel, se trouvent présents sous forme d'oxydes dans les catalyseurs à l'état frais. Les teneurs en constituants actifs sont variables. Le plus souvent, elles sont de l'ordre de 10 – 15% pour l'oxyde de molybdène MoO$_3$ et 4 – 5% pour l'oxyde de cobalt CoO ou l'oxyde de nickel NiO.

Au cours de l'hydrodésulfuration, des matières carbonées se déposent sur le catalyseur. Ces dépôts carbonés qui diminuent l'activité du catalyseur peuvent être éliminés par oxydation à l'air lors de la régénération du catalyseur. Il se produit aussi, en cours d'hydrodésulfuration, une réaction entre l'hydrogène sulfuré libéré et une partie des constituants du catalyseur avec formation de composés métalliques sulfurés. En outre, le catalyseur se charge peu à peu de métaux contenus dans les charges pétrolières traitées. Ces métaux, qui sont principalement le vanadium et le nickel, se logent dans les pores du catalyseur en réduisant progressivement son activité. Lorsque l'activité du catalyseur est réduite au point de ne plus permettre une désulfuration efficace, le catalyseur est évacué comme résidu et remplacé par un catalyseur frais.

Il est souhaitable de traiter ces résidus de catalyseurs d'hydrodésulfuration car, non seulement leur simple évacuation contribue à l'accroissement de la pollution, mais ils renferment en outre des métaux qu'il peut être rentable de récupérer en vue de les réutiliser comme catalyseurs ou à d'autres fins.

La présente invention a pour objet la récupération de métaux à partir de résidus de catalyseurs d'hydrodésulfuration suivant un procédé de chloration dans lequel on sépare du catalyseur, par volatilisation, les oxychlorures de molybdène et de vanadium et le chlorure d'aluminium.

Il est connu que l'on peut séparer le molybdène et le vanadium de matières les contenant, telles que minerais ou résidus de catalyseurs, par traitement au moyen de chlore ou d'acide chlorhydrique de manière à former des oxychlorures de molybdène et de vanadium qui sont volatilisés.

Ainsi, le brevet français n° 724 905 décrit un procédé d'extraction du molybdène, du tungstène et du vanadium des matières qui en renferment par un traitement à 300 – 400° C au moyen de chlore ou de gaz chlorhydrique, les matières traitées étant utilisées mélangées à des substances carbonées. Ces substances carbonées peuvent être ajoutées à la matière première sous forme de coke, de lignite, de charbon de bois, etc. . . . ou s'y trouver déjà au départ comme cést le cas, par exemple, pour certains catalyseurs tels que ceux ayant servi à l'hydrogénation du charbon. Les oxychlorures volatilisés peuvent être condensés sous forme de poudre par refroidissement ou être décomposés par l'eau ou la vapeur d'eau. Dans ce procédé, les conditions sont telles que les autres métaux présents dans la matière première, capables de former des chlorures volatils, comme le fer, l'aluminium et le zinc, ne sont pratiquement pas volatilisés, la formation du chlorure d'aluminium volatil, notamment, ne s'effectuant que très lentement.

Dans le brevet américain n° 3 180 706, on décrit un procédé de récupération de métaux à partir de catalyseurs usés, notamment de catalyseurs usés d'hydrodésulfuration, par chloration après une oxydation et une sulfuration préalables du catalyseur. La chloration est effectuée en phase vapeur, à une température d'environ 290° C à 370° C, à l'aide d'un agent de chloration essentiellement anhydre constitué par du chlore ou, de préférence, par un mélange de chlore et d'un dérivé chloré de carbone ou du soufre, comme le tétrachlorure de carbone. La chloration a pour effet de volatiliser le molybdène sous forme de chlorure et de transformer le cobalt et le nickel en chlorures solubles. Les étapes préliminaires d'oxydation et de sulfuration visent à améliorer la séparation des métaux. Le traitement d'oxydation est effectué à environ 650 – 1000° C au moyen d'un gaz contenant de l'oxygène, suffisamment longtemps pour permettre la transformation d'une partie importante du molybdène en sa valence la plus élevée. Au cours de cette oxydation, il se produit également une élimination par combustion du carbone contenu dans le catalyseur. Le traitement de sulfuration est effectué à environ 430 – 800° C au moyen de vapeurs de soufre ou d'un sulfure volatil comme l'hydrogène sulfuré, le sulfure de carbone ou mercaptan. Après oxydation, sulfuration et chloration, le molybdène est récupéré des vapeurs de chloration soit en condensant par refroidissement le chlorure de molybdène sous forme de poudre, soit en le mettant en contact avec une solution aqueuse pour dissoudre les chlorures, en évitant une mise en solution de l'alumine. Ce procédé a le désavantage de nécessiter plusieurs traitements successifs du catalyseur, dont notamment un traitement d'oxydation au cours duquel, par suite de la présence de soufre dans le catalyseur, il se produit un dégagement d'anhydride sulfureux polluant. En outre, il ne permet pas une récupération aisée de l'aluminium.

0 017 285

Les méthodes proposées jusqu'ici pour récupérer par chloration le molybdène et le vanadium, avec éventuellement l'aluminium, à partir de résidus de catalyseurs font appel à des agents de chloration, généralement le chlore ou l'acide chlorhydrique, essentiellement anhydres, ceci dans le but d'obtenir des rendements d'extraction des métaux les plus élevés possible. Il est connu, en effet, que la présence d'eau dans l'agent de chloration diminue les rendements d'extraction. L'effet inhibiteur de l'eau sur l'extraction des métaux sous forme de chlorures volatils est surtout sensible dans le cas la volatilisation de l'aluminium, ou d'autres métaux comme le fer, dont les chlorures ont facilement tendance à être décomposés par l'eau avec formation d'hydroxydes.

Un désavantage de l'emploi d'agents de chloration anhydres est que des problèmes se posent si l'on veut recycler pour l'attaque du catalyseur l'excès d'agent de chloration non utilisé pour la formation de chlorures, surtout si les chlorures ou oxychlorures volatils sont extraits du mélange gazeux de chloration par voie humide, c'est-à-dire au moyen d'eau ou d'une solution aqueuse, de l'eau étant toujours dans ce cas entraînée par le mélange gazeux. Le recyclage des gaz non utilisés, lorsqu'on effectue la chloration en milieu anhydre, impose donc presque nécessairement un traitement de séchage du gaz recyclé.

La demanderesse a découvert à présent que l'on pouvait récupérer par chloration, d'une manière simple et avec des rendements exceptionnels, le molybdène, le vanadium, l'aluminium ainsi que le cobalt et le nickel à partir de résidus de catalyseurs d'hydrodésulfuration en effectuant la chloration au moyen d'un mélange de chlore gazeux, d'acide chlorhydrique gazeux et de vapeur d'eau de manière à volatiliser les oxychlorures de molybdène et de vanadium et le chlorure d'aluminium, et en absorbant les produits volatilisés au moyen d'une solution aqueuse renfermant de l'acide chlorhydrique.

Suivant le procédé de l'invention, le résidu de catalyseur d'hydrodésulfuration, débarrassé préalablement des hydrocarbures résiduels, est soumis à un traitement de chloration à des températures augmentant depuis environ 200°C jusqu'à environ 400°C, au moyen d'un mélange de chlore gazeux, d'acide chlorhydrique gazeux et de vapeur d'eau ne renfermant pas plus d'environ 15% en volume de vapeur d'eau par rapport au mélange gazeux total. Les oxychlorures et chlorures volatilisés sont absorbés par une solution aqueuse saturée, ou proche de la saturation, en acide chlorhydrique à des températures comprises entre environ 20°C et environ 70°C, les gaz provenant de l'étape d'absorption des oxychlorures et chlorures volatils étant recyclés pour le traitement de chloration après addition des quantités nécessaires de chlore et/ou d'acide chlorhydrique. De la solution obtenue par absorption des oxychlorures et chlorures volatils, le chlorure d'aluminium est séparé par précipitation sous forme d'un chlorure hexahydraté, laissant une solution des chlorures de molybdène et de vanadium de laquelle on récupère l'acide chlorhydrique excédentaire pour le recycler dans le procédé, par exemple, à l'étape d'absorption des oxychlorures et chlorures volatils. Du catalyseur restant après chloration, l'on récupère le cobalt et le nickel sous forme de chlorures solubles dans l'eau.

Le résidu de catalyseur d'hydrodésulfuration, avant d'être soumis au traitement de chloration, doit d'abord être débarrassé des hydrocarbures résiduels, ce qui peut être réalisé par extraction au moyen d'un solvant organique. On peut utiliser comme solvant, par exemple, l'éther de pétrole ayant un point d'ébullition de 50°C. Les hydrocarbures que l'on extrait ainsi du catalyseur représentent environ 15% en poids du catalyseur. Après extraction, on récupère par distillation, d'une part, le solvant que l'on recycle à l'extraction, d'autre part, les hydrocarbures provenant du catalyseur lesquels peuvent servir comme combustible pour la distillation du solvant.

Il n'est pas nécessaire d'éliminer du catalyseur, avant chloration, le carbone qui y est contenu en soumettant le catalyseur à une calcination. Ce traitement de calcination, au contraire, n'est pas souhaitable car il donne lieu à un dégagement d'anhydride sulfureux polluant et, en outre, il provoque la formation d'un aluminate de cobalt rendant plus difficile l'extraction du cobalt.

Après l'étape préliminaire d'extraction des hydrocarbures, le catalyseur est soumis à un traitement de chloration au moyen d'un mélange de chlore gazeux, d'acide chlorhydrique gazeux et de vapeur d'eau à une température augmentant depuis environ 200°C jusqu'à environ 400°C.

Le mélange gazeux de chloration est constitué par du gaz recyclé, provenant de l'étape d'absorption des oxychlorures et chlorures volatils, auquel ont été ajoutées les quantités nécessaires de chlore et/ou d'acide chlorhydrique de manière à maintenir les quantités et proportions souhaitées de chlore, d'acide chlorhydrique et de vapeur d'eau.

Les proportions de chlore, d'acide chlorhydrique et de vapeur d'eau dans le mélange de chloration peuvent varier. Toutefois, la proportion de vapeur d'eau ne peut pas dépasser une valeur au-delà de laquelle les rendements d'extraction des métaux sous forme de chlorures et oxychlorures volatils deviennent insuffisants. Il convient de ne pas dépasser une teneur en vapeur d'eau dans le mélange de chloration d'environ 15% en volume. Quant à la teneur minimale en vapeur d'eau dans le mélange de chloration, celle-ci est fonction essentiellement des conditions opératoires. Il y a, en effet, toujours une certaine quantité d'eau dans le mélange de chloration du fait que l'on recycle les gaz provenant de l'étape d'absorption des chlorures et oxychlorures volatils. En pratique, dans les conditions normales de fonctionnement du procédé, on ne descend généralement pas en dessous d'une teneur en vapeur d'eau d'environ 2% en volume dans le mélange de chloration.

Les proportions relatives de chlore et d'acide chlorhydrique dans le mélange de chloration peuvent

3

varier dans des limites assez larges. Le chlore et l'acide chlorhydrique réagissent tous deux avec les oxydes présents dans le catalyseur pour former des chlorures et oxychlorures. Il y a formation, notamment, des oxychlorures volatils de molybdène $MoO_2Cl_2$ et de vanadium $VOCl_3$, du chlorure volatil d'aluminium $AlCl_3$ ainsi que des chlorures de cobalt $CoCl_2$ et de nickel $NiCl_2$. Le chlore agit, en plus, comme oxydant en amenant le molybdène et le vanadium à leur valence supérieure.

Les meilleurs résultats d'extraction sont obtenus en utilisant des proportions plus ou moins équivalentes de chlore et d'acide chlorhydrique dans le mélange gazeux de chloration. On utilise de préférence, des mélanges de chloration ayant des teneurs d'environ 40 à 60% en volume de chlore, d'environ 40 à 60% en volume d'acide chlorhydrique et d'environ 5 à 10% en volume de vapeur d'eau. Ces mélanges de chloration permettent d'obtenir, en général, des rendements d'extraction supérieurs à 70% pour le chlorure d'aluminium et supérieurs à 95% pour les oxychlorures de molybdène et de vanadium. En même temps que sont volatilisés les oxychlorures de molybdène et de vanadium et le chlorure d'aluminium, il se produit une certaine volatilisation, sous forme de chlorure, du cobalt contenu dans le catalyseur. La fraction de cobalt ainsi volatilisé représente environ 15% de la teneur en cobalt du catalyseur. De même, une petite quantité du soufre présent dans le catalyseur peut être entraînée par sublimation avec les produits volatilisés.

La chloration est effectuée à des températures augmentant de manière continue ou par paliers d'environ 200° C jusqu'à environ 400° C. On évite de travailler au-delà de 400° C, car à ces températures élevées, il se produit une sublimation trop importante du soufre contenu dans le catalyseur, tandis qu'en dessous de 200° C, les rendements d'extraction, en particulier du molybdène, sont insuffisants.

La chloration peut être réalisée dans tout dispositif adéquat, tel qu'un four vertical contenant les granules de catalyseur que l'on peut, par exemple, disposer dans un panier pouvant facilement être retiré du four et remplacé. Le mélange gazeux de chloration, chauffé préalablement par passage dans un échangeur de chaleur, est envoyé par les bas du four au travers du lit de catalyseur et s'échappe par le haut du four en entraînant les chlorures et oxychlorures volatilisés. De là, le mélange gazeux est dirigé vers la colonne d'absorption des chlorures et oxychlorures.

Le traitement de chloration dans le procédé suivant l'invention est effectué avantageusement d'une manière continue, en recyclant à la chloration les gaz provenant de l'étape d'absorption des oxychlorures et chlorures volatils après addition des quantités nécessaires de chlore et/ou d'acide chlorhydrique. On peut faire passer plusieurs fois le mélange gazeux de chloration au travers du catalyseur jusqu'à ce qu'il ne se forme plus d'oxychlorures ou chlorures volatils. Une fois épuisé, le catalyseur est retiré du four et remplacé par une nouvelle charge. Il est possible aussi d'effectuer la chloration à l'aide de deux fours fonctionnant alternativement de telle manière qu'après épuisement du catalyseur dans un four, le mélange gazeux de chloration soit dirigé dans l'autre four renfermant une nouvelle charge de catalyseur à traiter.

Les oxychlorures de molybdène et de vanadium et le chlorure d'aluminium volatilisés sont séparés du mélange gazeux provenant de la chloration par absorption dans une solution aqueuse renfermant de l'acide chlorhydrique à une température comprise entre environ 20° C et environ 70° C. L'on forme ainsi une solution dans laquelle le molybdène, le vanadium et l'aluminium sont dissous sous forme de chlorures.

On utilise pour effectuer cette absorption des oxychlorures et chlorures volatils une solution saturée, ou proche de la saturation, en acide chlorhydrique, ceci afin d'éviter une absorption simultanée trop importante du chlore et surtout de l'acide chlorhydrique.

La température d'absorption doit être comprise entre environ 20° C et environ 70° C. En effet, au-delà de 70° C, l'entraînement de vapeur d'eau avec les gaz recyclés vers la chloration devient trop important, tandis qu'en dessous de 20° C, le chlorure d'aluminium a tendance à précipiter sous forme de chlorure d'aluminium hexahydraté. De préférence, l'absorption est effectuée à une température comprise entre environ 60° C et environ 65° C.

On peut réaliser l'absorption à l'aide d'une colonne à plateaux dans laquelle le mélange gazeux, arrivant par le bas de la colonne, entre en contact à contre-courant avec la solution d'absorption introduite au sommet de la colonne.

On recueille au bas de la colonne d'absorption une solution aqueuse concentrée d'acide chlorhydrique renfermant les chlorures de molybdène, vanadium et aluminium. Une partie de cette solution est recyclée comme solution d'absorption en l'envoyant, après refroidissement, au sommet de la colonne d'absorption. Le refroidissement de la solution avant recyclage est nécessaire car il s'est produit, suite à l'absorption, une augmentation de température du fait de la dissolution exothermique des chlorures et oxychlorures et de l'absorption d'acide chlorhydrique.

Suivant le procédé de l'invention, la solution provenant de la colonne d'absorption est envoyée dans une cuve munie d'un système de refroidissement où sa température est abaissée à moins de 70° C environ, de préférence à une valeur comprise entre environ 60° C et environ 65° C, une partie de cette solution étant recyclée à la colonne d'absorption.

Pour constituer la solution d'absorption, il est avantageux, suivant le procédé de l'invention, d'utiliser aussi une partie des solutions chlorhydriques renfermant les chlorures de molybdène et de vanadium obtenues ultérieurement dans le procédé après la séparation du chlorure d'aluminium. Ces solutions peuvent être, par exemple, celles formées au cours du traitement de récupération de

4

l'excédent d'acide chlorhydrique par chauffage de la solution des chlorures de molybdène et de vanadium. Comme ces solutions se trouvent à une température élevée, il peut être nécessaire de refroidir la partie que l'on recycle à l'absorption, par exemple, en l'envoyant dans la cuve munie d'un système de refroidissement où est recueillie la solution provenant de l'absorption.

Suivant le procédé de l'invention, l'on peut également recycler avantageusement à l'étape d'absorption l'acide chlorhydrique gazeux récupéré ultérieurement par chauffage de la solution des chlorures de molybdène et de vanadium. Cet acide chlorhydrique gazeux, qui se trouve en mélange avec de la vapeur d'eau, peut être recyclé soit en l'envoyant directement dans le bas de la colonne d'absorption, soit en l'envoyant dans la cuve munie d'un système de refroidissement où est recueillie la solution provenant de l'absorption.

Des dispositifs d'introduction d'eau et/ou d'acide chlorhydrique dans le système d'absorption doivent être prévus en vue de compenser les quantités perdues, non recyclées dans le procédé. Ces dispositifs peuvent se trouver, par exemple, sur le parcours de la solution d'absorption recyclée ou sur la cuve où est recueillie la solution d'absorption.

Après absorption des chlorures et oxychlorures volatils, la solution obtenue, renfermant les chlorures de molybdène, de vanadium et d'aluminium en milieu acide chlorhydrique, est traitée de manière à séparer le chlorure d'aluminium sous forme d'un précipité de chlorure d'aluminium hexahydraté. Toutefois, avant d'effectuer cette précipitation, il est préférable d'éliminer le soufre de la solution car le soufre peut freiner la précipitation et la filtration du chlorure d'aluminium. L'élimination du soufre s'effectue par une simple filtration de la solution à l'aide d'un filtre conventionnel.

La précipitation du chlorure d'aluminium hexahydraté $AlCl_3 \cdot 6 H_2O$ est effectuée en saturant à froid la solution au moyen d'acide chlorhydrique gazeux. L'on porte, à cet effet, la concentration en acide chlorhydrique de la solution à environ 44% en poids tout en refroidissant à une température d'environ 10°C à environ 15°C. Ceci peut être réalisé, par exemple, dans une cuve munie d'un système de refroidissement et d'agitateurs dans laquelle on envoie de l'acide chlorhydrique à l'état gazeux.

L'acide chlorhydrique gazeux utilisé pour la précipitation du chlorure d'aluminium hexahydraté dans le cadre de la présente invention peut être constitué avantageusement par de l'acide chlorhydrique gazeux recyclé obtenu au vours du traitement ultérieur de récupération de l'excédent d'acide chlorhydrique à partir de la solution renfermant les chlorures de molybdène et de vanadium.

Le chlorure d'aluminium hexahydraté précipité est ensuite séparé de la solution par filtration et est lavé au moyen d'une solution saturée en acide chlorhydrique.

Suite à la séparation du chlorure d'aluminium, l'on obtient une solution saturée en acide chlorhydrique renfermant les chlorures de molybdène et de vanadium. Cette solution est alors chauffée afin de récupérer l'acide chlorhydrique excédentaire qui peut être recyclé dans le procédé, en donnant une solution des chlorures de molybdène et de vanadium peu concentrée en acide chlorhydrique.

Ce traitement de récupération de l'acide chlorhydrique excédentaire par chauffage de la solution saturée en acide chlorhydrique des chlorures de molybdène et de vanadium peut être effectué en une ou plusieurs étapes.

Il est particulièrement avantageux, dans le procédé suivant l'invention, d'effectuer le chauffage de la solution saturée en acide chlorhydrique, renfermant les chlorures de molybdène et de vanadium, en deux étapes, dans des conditions telles que l'on passe d'une solution saturée en acide chlorhydrique, c'est-à-dire renfermant environ 44% en poids d'acide chlorhydrique à 10°C, à une solution finale renfermant environ 20% en poids d'acide chlorhydrique.

Au cours de la première étape, on chauffe la solution à environ 80°C. Il se dégage à cette température un mélange d'acide chlorhydrique gazeux et de vapeur d'eau. Ce mélange gazeux riche en acide chlorhydrique, ayant une teneur en vapeur d'eau d'environ 15,8% en volume, peut être recyclé dans le procédé, en particulier à l'étape de précipitation du chlorure d'aluminium hexahydraté. Dans la solution, la teneur en acide chlorhydrique est abaissée au cours de cette première étape à environ 32% en poids. Il est avantageux de recycler une partie de cette solution dans le procédé à l'étape d'absorption.

Au cours de la seconde étape, la solution est chauffée jusqu'à une température de 108,6°C, cette température représentant la température d'ébulliton du mélange azéotropique formé entre l'eau et l'acide chlorhydrique renfermant 79,8% en poids d'eau et 20,2% en poids d'acide chlorhydrique. Le mélange gazeux dégagé au cours de cette seconde étape peut être recyclé dans le procédé, en particulier à l'étape d'absorption des chlorures et oxychlorures volatils.

Après le traitement de récupération de l'acide chlorhydrique excédentaire, la solution des chlorures de molybdène et de vanadium peu concentrée en acide chlorhydrique peut être traitée par des méthodes diverses en vue de séparer le molybdène et le vanadium. L'une de ces méthodes consiste, par exemple, à neutraliser la solution par de l'ammoniac pour précipiter le vanadium sous forme de métavanadate d'ammonium que l'on sépare par filtration et à effectuer ensuite la transformation du molybdène sous forme de tétramolybdate ammonique.

Le résidu de catalyseur, restant après le traitement de chloration, renferme du cobalt et du nickel sous forme de chlorures solbles dans l'eau. Par un traitement à l'eau, ces métaux sont récupérés avec des rendements supérieurs à 90% si la fraction de cobalt volatilisé y est jointe. Le cobalt et le nickel peuvent finalement être récupérés de la solution des chlorures suivant des méthodes connues.

L'invention est illustrée par l'exemple non limitatif suivant.

## Exemple

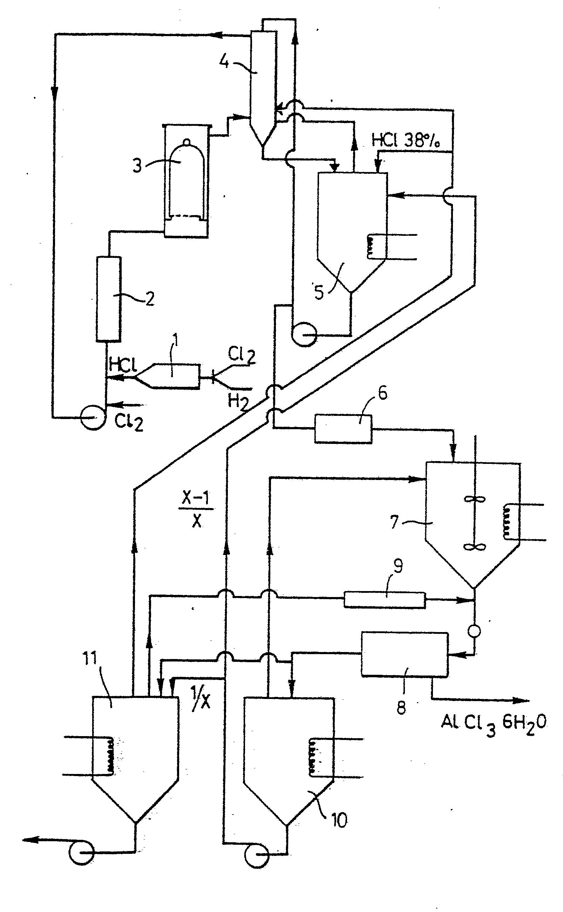

La figure annexée représente un schéma de réalisation de procédé suivant l'invention.

De l'acide chlorhydrique, obtenu par combustion d'hydrogène avec du chlore dans un brûleur 1, et du chlore sont ajoutés à du gaz recyclé et le mélange gazeux est envoyé dans un échangeur de chaleur en tantale 2, où sa température est portée à environ 200 à environ 400° C, puis dans un four vertical 3 renfermant le catalyseur usé disposé dans un panier amovible. Ce four est construit avec un revêtement en tantale afin de résister à la corrosion du mélange gazeux jusqu'à une température de 400° C. Il s'ouvre par le haut de façon à permettre l'échange du panier renfermant le catalyseur après épuisement de la charge. A la sortie du four, le mélange gazeux, contenant des chlorures d'aluminium et de cobalt et des oxychlorures de molybdène et de vanadium volatilisés, est envoyé par une conduite chauffée dans le bas d'une colonne d'absorption 4 où il est lavé, à contrecourant, par une solution d'absorption saturée en acide chlorhydrique à une température d'environ 65° C.

Dans le bas de la colonne d'absorption 4, est introduit également de l'acide chlorhydrique gazeux recyclé, récupéré à partir d'un bouilleur 11 sous forme d'un mélange azéotropique avec la vapeur d'eau. La solution saturée en acide chlorhydrique, introduite au sommet de la colonne d'absorption 4, provient d'un réservoir tampon 5, muni d'un dispositif de refroidissement, où est recueillie la solution s'écoulant dans le bas de la colonne d'absorption. Le réservoir tampon 5 comporte également des dispositifs d'introduction d'acide chlorhydrique recyclé, récupéré sous forme d'une solution à 32% à partir d'un bouilleur 10, ainsi que d'acide chlorhydrique frais sous forme d'une solution aqueuse à 38%. Une conduite, reliant le haut du réservoir tampon 5 au bas de la colonne d'absorption 4, permet le recyclage des gaz se dégageant de la solution d'absorption. Le volume du réservoir 5 est déterminé par le nombre de charges de catalyseur que l'on traite avec la même solution d'absorption. La solution peut contenir des particules de soufre que ne sont pas gênantes pour l'absorption. Il n'en va pas de même si la concentration de la solution dépasse 8,8 g Al/l à 65° C, le chlorure d'aluminium précipitant sous forme d'hexahydrate. Des bouchages par cristallisation peuvent alors survenir dans la colonne et le mélange soufre — $AlCl_3 \cdot 6 H_2O$ est malaisé à filtrer. La partie de solution provenant du réservoir tampon 5 non recyclée à l'absorption, avant d'atteindre le seuil critique de 8,8 g Al/litre à 65° C, est débarrassée du soufre par un filtre 6 et est envoyée dans un saturateur 7, muni d'un dispositif de refroidissement et d'agitateurs, où l'on introduit de l'acide chlorhydrique gazeux récupéré à partir du bouilleur 10. Après saturation à 10° C de la solution par l'acide chlorhydrique, la suspension est amenée sur un filtre 8 où le chlorure d'aluminium hexahydraté est séparé. Le précipité est lavé au moyen d'une solution aqueuse d'acide chlorhydrique obtenue par condensation dans un réfrigérant 9 d'un mélange d'acide chlorhydrique gazeux et de vapeur d'eau récupéré à partir du bouilleur 11. La solution débarrassée du chlorure d'aluminium est envoyée dans le bouilleur 10 où elle est chauffée à 80° C. L'acide chlorhydrique distillé est recyclé dans le saturateur 7. La solution provenant du bouilleur 10 est recyclée vers le réservoir tampon 5 sauf une fraction 1/X, X représentant le nombre de charges de catalyseur traité avec la même solution d'absorption, qui est envoyée dans le bouilleur 11 où elle est distillée jusqu'à la température de l'azéotrope (108,6° C) puis évaporée à un volume de 50%. La solution des chlorures est alors envoyée à la récupération du vanadium et du molybdène. L'acide chlorhydrique distillé est récupéré en le recyclant dans le bas de la colonne d'absorption 4.

La charge de catalyseur épuisé, retirée du four 3, est traitée à l'eau chaude afin de mettre les chlorures de nickel et de cobalt en solution. Cette solution est alors envoyée vers une installation de séparation classique du nickel et du cobalt.

A titre d'exemple, on a effectué le traitement de chloration de cinq charges successives de catalyseur usé (X = 5) en utilisant, pour le traitement du mélange gazeux, la même solution d'absorption de manière à obtenir des concentrations datisfaisantes en molybdène et vanadium tout en ayant un volume suffisant de solution pour dissoudre le chlorure d'aluminium.

Le catalyseur usé présentait l'analyse suivante:

|  | Catalyseur à traiter | Analyse après extraction à l'éther de pétrole |
|---|---|---|
| Vanadium | 7,22% | 8,40% |
| Molybdène | 5,42% | 6,30% |
| Aluminium | 17,72% | 20,60% |
| Cobalt | 1,03% | 1,20% |
| Nickel | 2,00% | 2,33% |
| Soluble dans l'éther de pétrole | 14,00% | — |

On a effectué le traitement de chloration sur des portions de 500 g de catalyseur usé dont l'huile a a été extraite par l'éther de pétrole, en utilisant un gaz de chloration ayant des teneurs moyennes de 46% de chlore, 46% d'acide chlorhydrique et 8% de vapeur d'eau avec un débit de 610 l/heure. Le réservoir tampon 5 de la colonne d'absorption renfermait 5 l d'une solution saturée en acide chlorhydrique à 65° C. Avant la précipitation de l'aluminium sous forme de chlorure hexahydraté, on a filtré 11 à 18 g de soufre; ce soufre renferme encore de faibles quantités des éléments extraits (voir tableau 2). On a obtenu une solution à 20% d'acide chlorhydrique (5 litres) présentant les teneurs suivantes en éléments métalliques:

| Vanadium | 39,5 g/l |
|---|---|
| Molybdène | 30,2 g/l |
| Aluminium | 0,17 g/l |
| Cobalt | 0,52 g/l |
| Nickel | 0,03 g/l |

Le résidu de catalyseur, restant dans le four après chaque opération de chloration, a été traité par 1 litre d'eau bouillante pendant 1 heure et la suspension obtenue a été filtrée. Comme le montre le tableau 2 ci-après, on retrouve dans le filtrat la majeure partie du cobalt présent dans le catalyseur de départ, presque tout le nickel et un peu d'aluminium. On a obtenu ainsi, après les 5 opérations, une solution (5 litres) présentant les teneurs suivants en éléments métalliques:

| Vanadium | 0,046 g/l |
|---|---|
| Molybdène | 0,037 g/l |
| Aluminium | 9,76 g/l |
| Cobalt | 4,63 g/l |
| Nickel | 11,43 g/l |

Le résidu de la filtration a été séché à 100° C et analysé afin de déterminer les métaux restants et de connaître, ainsi, par différence les rendements d'extraction des métaux.

Les résultats obtenus sont renseignés dand les tableaux 1 et 2 ci-dessous.

Tableau 1

| Opération | Rendements d'extraction | | | | |
|---|---|---|---|---|---|
| N° | V % | Mo % | Al % | Co % | Ni % |
| 1 | 99,20 | 94,74 | 60,39 | 92,70 | 98,62 |
| 2 | 99,21 | 96,40 | 76,01 | 95,50 | 99,31 |
| 3 | 99,32 | 96,60 | 71,60 | 95,23 | 98,95 |
| 4 | 99,20 | 97,41 | 67,30 | 94,06 | 97,82 |
| 5 | 99,36 | 98,61 | 75,54 | 96,09 | 99,00 |
| Moyennes | 99,26 | 96,75 | 70,17 | 94,71 | 98,74 |

Tableau 2

Répartition des métaux extraits (moyenne des 5 opérations)

| | V % | Mo % | Al % | Co % | Ni % |
|---|---|---|---|---|---|
| Solution des chlorures après séparation de l'aluminium | 94,18 | 96,03 | 0,34 | 17,55**) | 0,56 |
| Solution nickel cobalt | 0,11 | 0,12 | 9,48 | 77,20 | 98,17 |
| $AlCl_3 \cdot 6 H_2O$ | 4,92*) | 0 | 60,49 | 0 | 0 |
| Soufre résiduaire | 0,06 | 0,74 | 0,13 | 0,03 | 0,02 |
| Totaux | 99,27 | 96,89 | 70,44 | 94,78 | 98,75 |

*) Ce vanadium est récupérable lors de la reprécipitation pour purification de $AlCl_3 \cdot 6 H_2O$
**) Ce cobalt se retrouve en solution après précipitation du vanadium et du molybdène; il est récupérable sous forme de CoS.

## Revendications

1. Procédé de récupération de métaux à partir de résidus de catalyseurs d'hydrodésulfuration d'hydrocarbures, contenant du molybdène, du vanadium, de l'aluminium, du cobalt et du nickel, préalablement débarrassés des hydrocarbures résiduels, par chloration de ces résidus de catalyseurs, caractérisé en ce qu'on soumet lesdits résidus de catalyseurs d'hydrodésulfuration d'hydrocarbures à une chloration au moyen d'un mélange de chlore gazeux, d'acide chlorhydrique gazeux et de vapeur d'eau dans des conditions telles que le molybdène et le vanadium soient volatilisés sous forme d'oxychlorures et l'aluminium sous forme de chlorure et on absorbe les produits ainsi volatilisés au moyen d'un milieu aqueux renfermant de l'acide chlorhydrique.

2. Procédé suivant la revendication 1, caractérisé en ce qu'on absorbe les produits volatilisés au moyen d'une solution aqueuse sensiblement saturée en acide chlorhydrique.

3. Procédé suivant la revendication 1, caractérisé en ce qu'on utilise un mélange de chloration contenant du chlore gazeux, de l'acide chlorhydrique gazeux et au maximum environ 15% en volume de vapeur d'eau par rapport au mélange gazeux total.

4. Procédé suivant l'une quelconque des revendications précédentes, caractérisé en ce que le traitement de chloration s'effectue à une température augmentant d'environ 200° C à environ 400° C.

5. Procédé suivant la revendication 2, caractérisé en ce qu'on absorbe les produits volatilisés à une température comprise entre environ 20° C et environ 70° C.

6. Procédé suivant l'une quelconque des revendications précédentes, caractérisé en ce qu'on recycle, pour le traitement de chloration, les gaz provenant de l'absorption des produits volatilisés, après addition des quantités nécessaires de chlore et/ou d'acide chlorhydrique gazeux.

7. Procédé suivant l'une quelconque des revendications précédentes, caractérisé en ce qu'on sépare l'aluminium de la solution obtenur par absorption des produits volatilisés, par précipitation sous forme de chlorure d'aluminium hexahydraté.

8. Procédé suivant la revendication 7, caractérisé en ce qu'on récupère l'acide chlorhydrique excédentaire de la solution de chlourures de molybdène et de vanadium obtenue après précipitation du chlorure d'aluminium hexahydraté et on recycle cet acide chlorhydrique dans le procédé.

9. Procédé suivant la revendication 1, caractérisé en ce qu'on récupère le cobalt et le nickel sous forme de chlorures hydrosolubles, du catalyseur ayant subi le traitement de chloration.

10. Procédé suivant l'une quelconque des revendications précédentes, caractérisé en ce que la teneur en vapeur d'eau du mélange de chloration est comprise entre environ 2% et environ 15% en volume.

11. Procédé suivant l'une quelconque des revendications précédentes, caractérisé en ce que le mélange de chloration contient des quantités sensiblement équivalentes d'acide chlorhydrique gazeux et de chlore.

12. Procédé suivant la revendication 11, caractérisé en ce que le mélange de chloration contient environ 40 à 60% en volume de chlore, environ 40 à 60% en volume d'acide chlorhydrique gazeux et environ 5 à 10% en volume de vapeur d'eau.

13. Procédé suivant la revendication 5, caractérisé en ce qu'on absorbe les produits volatilisés à une température comprise entre environ 60° C et environ 65° C.

14. Procédé suivant la revendication 5, caractérisé en ce qu'on recycle au moins une partie de la solution ayant servi à l'absorption des produits volatilisés, pour l'absorption de nouvelles quantités de ces produits.

15. Procédé suivant la revendication 14, caractérisé en ce qu'on refroidit la partie recyclée de la solution ayant servi à l'absorption des produits volatilisés, à une température inférieure à environ 70° C, de préférence à une température comprise entre environ 60 et environ 65° C.

16. Procédé suivant la revendication 7, caractérisé en ce qu'on récupère le chlorure d'aluminium hexahydraté par saturation à froid, au moyen d'acide chlorhydrique gazeux, de la solution d'absorption des produits volatilisés.

17. Procédé suivant la revendication 16, caractérisé en ce qu'on chauffe la solution saturée en acide chlorhydrique renfermant les chlorures de molybdène et de vanadium en deux étapes, la première étape abaissant la teneur en acide chlorhydrique de la solution saturée jusqu'à environ 32% en poids et cette solution appauvrie en acide chlorhydrique étant, au moins en partie, recyclée pour l'absorption des produits volatilisés, la seconde étape de chauffaae consistant à chauffer la solution jusqu'à la température d'ébullition du mélange azéotropique formé entre l'eau et l'acide chlorhydrique en présence, l'azéotrope eau-acide chlorhydrique obtenu étant recyclé pour l'absorption des produits volatilisés.

## Patentansprüche

1. Verfahren zur Rückgewinnung von Metallen aus Katalysatorrückständen der hydrierenden Entschwefelung von Kohlenwasserstoffen, welche Rückstände zuvor von Restkohlenwasserstoffen befreit wurden, durch Chlorierung dieser Katalysatorrückstände mittels Chlor und gasförmiger Salzsäure, dadurch gekennzeichnet, daß die Katalysatorrückstände aus der hydrierenden Entschwefelung von Kohlenwasserstoffen einer Chlorierung mittels einer Mischung aus gasförmigem Chlor, gasförmiger Salzsäure und Wasserdampf unter solchen Bedingungen unterworfen werden, daß Molybdän und Vanadium in Form von Oxychloriden und Aluminium als Chlorid verflüchtigt werden und daß die so verflüchtigten Produkte mittels eines wässerigen, Salzsäure enthaltenden Mediums absorbiert werden.

2. Verfahren nach Anspruch 1, dadurch gekennzeichnet, daß die verflüchtigten Produkte mittels einer mit Salzsäure im wesentlichen gesättigten, wässerigen Lösung absorbiert werden.

3. Verfahren nach Anspruch 1, dadurch gekennzeichnet, daß eine Chlorierungsmischung verwendet wird, welche gasförmiges Chlor, gasförmige Salzsäure und maximal etwa 15 Vol.-% Wasserdampf, bezogen auf die gesamte gasförmige Mischung, enthält.

4. Verfahren nach einem der vorhergehenden Ansprüche, dadurch gekennzeichnet, daß die Chlorierungsbehandlung bei einer von etwa 200° C bis etwa 400° C ansteigenden Temperatur durchgeführt wird.

5. Verfahren nach Anspruch 2, dadurch gekennzeichnet, daß die verflüchtigten Produkte bei einer Temperatur zwischen etwa 20° C und etwa 70° C absorbiert werden.

6. Verfahren nach einem der vorhergehenden Ansprüche, dadurch gekennzeichnet, daß die von der Absorption der verflüchtigten Produkte stammenden Gase nach Zugabe von nötigen Mengen an Chlor und/oder an gasförmiger Salzsäure für die Chlorierungsbehandlung rückgeführt werden.

7. Verfahren nach einem der vorhergehenden Ansprüche, dadurch gekennzeichnet, daß Aluminium aus der durch Absorption der verflüchtigten Produkte erhaltenen Lösung durch Ausfällung als Aluminiumchlorid-Hexahydrat abgetrennt wird.

9

8. Verfahren nach Anspruch 7, dadurch gekennzeichnet, daß die überschüssige Salzsäure aus der nach Ausfällung des Aluminiumchlorid-Hexahydrates erhaltenen Lösung der Chloride von Molybdän und Vanadium rückgewonnen wird und diese Salzsäure in den Prozeß rückgeführt wird.

9. Verfahren nach Anspruch 1, dadurch gekennzeichnet, daß Kobalt und Nickel als wasserlösliche Chloride aus dem der Chlorierungsbehandlung unterworfenen Katalysator rückgewonnen werden.

10. Verfahren nach einem der vorhergehenden Ansprüche, dadurch gekennzeichnet, daß der Gehalt an Wasserdampf der Chlorierungsmischung zwischen etwa 2 und etwa 15 Vol.-% beträgt.

11. Verfahren nach einem der vorhergehenden Ansprüche, dadurch gekennzeichnet, daß die Chlorierungsmischung im wesentlichen äquivalente Mengen an gasförmiger Salzsäure und Chlor enthält.

12. Verfahren nach Anspruch 11, dadurch gekennzeichnet, daß die Chlorierungsmischung etwa 40 bis 60 Vol.-% Chlor, etwa 40 bis 60 Vol.-% gasförmige Salzsäure und etwa 5 bis 10 Vol.-% Wasserdampf enthält.

13. Verfahren nach Anspruch 5, dadurch gekennzeichnet, daß die verflüchtigten Produkte bei einer Temperatur zwischen etwa 60° C und etwa 65° C absorbiert werden.

14. Verfahren nach Anspruch 5, dadurch gekennzeichnet, daß zumindest ein Teil der zur Absorption der verflüchtigten Produkte verwendeten Lösung zur Absorption weiterer Mengen an diesen Produkten rückgeführt wird.

15. Verfahren nach Anspruch 14, dadurch gekennzeichnet, daß der rückgeführte Teil der zur Absorption der verflüchtigten Produkte verwendeten Lösung auf eine Temperatur unter etwa 70° C, vorzugsweise auf eine Temperatur zwischen etwa 60 und etwa 65° C, abgekühlt wird.

16. Verfahren nach Anspruch 7, dadurch gekennzeichnet, daß das Aluminiumchlorid-Hexahydrat durch Kaltsättigung mittels gasförmiger Salzsäure aus der Absorptionslösung der verflüchtigten Produkte rückgewonnen wird.

17. Verfahren nach Anspruch 16, dadurch gekennzeichnet, daß die mit Salzsäure gesättigte, die Chloride von Molybdän und Vanadium enthaltende Lösung in zwei Stufen erhitzt wird, wobei in der ersten Stufe der Gehalt der gesättigten Lösung an Salzsäure bis etwa 32 Gew.-% erniedrigt und diese an Salzsäure verarmte Lösung zumindest zum Teil zur Absorption der verflüchtigten Produkte rückgeführt wird, und die zweite Erhitzungsstufe darin besteht, daß die Lösung bis zur Siedetemperatur des azeotropen Gemisches aus Wasser und der anwesenden Salzsäure erhitzt wird und das erhaltene Wasser-Salzsäure-Azeotrop zur Absorption der verflüchtigten Produkte rückgeführt wird.

## Claims

1. Process for recovering metals from residues of catalysts of hydrodesulfurization of hydrocarbons from which the residual hydrocarbons have been previously removed, by chlorination of said catalyst residues by means of chlorine and gaseous hydrochloric acid, characterized by the fact that said residues of hydrodesulfurization catalysts are chlorinated by means of a mixture of gaseous chlorine, gaseous hydrochloric acid and water vapor under such conditions that the molybdenum and the vanadium are volatilized as oxychlorides and the aluminium is volatilized as chloride and the so volatilized products are absorbed by means of an aqueous medium containing hydrochloric acid.

2. Process according to claim 1, characterized by the fact the volatilized products are absorbed by means of an aqueous solution which is substantially saturated with hydrochloric acid.

3. Process according to claim 1, characterized by the fact that a chlorinating mixture containing gaseous chlorine, gaseous hydrochloric acid and at most about 15% by volume of water vapor with respect to the total gaseous mixture is used.

4. Process according to any one of the preceding claims, characterized by the fact that the chlorination treatment is effected at a temperature increasing from about 200° C to about 400° C.

5. Process according to claim 2, characterized by the fact that the volatilized products are absorbed at a temperature comprised between about 20° C and about 70° C.

6. Process according to any one of the preceding claims, characterized by the fact that, for the chlorination treatment, the gases resulting from the absorption of the volatilized products are recycled after addition thereto of the necessary amounts of chlorine and/or gaseous hydrochloric acid.

7. Process according to any one of the preceding claims, characterized by the fact that aluminium is separated by precipitation as hexahydrated aluminium chloride from the solution obtained by absorption of the volatilized products.

8. Process according to claim 7, characterized by the fact that the excess of hydrochloric acid is recovered from the solution of chlorides of molybdenum and vanadium obtained after the precipitation of the hexahydrated aluminium chloride and said hydrochloric acid is recycled into the process.

9. Process according to claim 1, characterized by the fact that the cobalt and the nickel are recovered as water soluble chlorides from the catalyst which has been chlorinated.

10. Process according to any one of the preceding claims, characterized by the fact that the water vapor content of the chlorinating mixture is comprised between about 2% and about 15% by volume.

11. Process according to any one of the preceding claims, characterized by the fact that the chlorinating mixture contains substantially equivalent amounts of gaseous hydrochloric acid and chlorine.

12. Process according to claim 11, characterized by the fact that the chlorinating mixture contains about 40 to 60% by volume of chlorine, about 40 to 60% by volume of gaseous hydrochloric acid and about 5 to 10% by volume of water vapor.

13. Process according to claim 5, characterized by the fact that the volatilized products are absorbed at a temperature comprised between about 60° C and about 65° C.

14. Process according to claim 5, characterized by the fact that at least a part of the solution which has been used for the absorption of the volatilized products is recycled for the absorption of further amounts of said products.

15. Process according to claim 14, characterized by the fact that the recycled part of the solution which has been used for the absorption of the volatilized products is cooled at a temperature of less than about 70° C, preferably at a temperature comprised between about 60 and about 65° C.

16. Process according to claim 7, characterized by the fact that the hexahydrated aluminium chloride is recovered by cool saturation of the absorption solution of the volatilized products, by means of gaseous hydrochloric acid.

17. Process according to claim 16, characterized by the fact that the hydrochloric acid saturated solution containing the molybdenum and vanadium chlorides is heated in two steps, the first step decreasing the hydrochloric acid content of said saturated solution to about 32% by weight and this solution containing less hydrochloric acid being, at least partially, recycled for the absorption of the volatilized products, the second heating step consisting of heating the solution to the boiling temperature of the azeotropic mixture formed between the present water and hydrochloric acid, the obtained water-hydrochloric acid azeotrope being recycled for the absorption of the volatilized products.